# EUROPEAN PATENT APPLICATION

(11) **EP 2 221 701 A1**
(43) Date of publication of application: **25.08.2010**
(21) Application number: 10153903.9
(22) Date of filing: 18.02.2010
(51) Int. Cl.: G05B 23/02

(54) **Alarm defining device and alarm defining method**

(30) Priority: 18.02.2009 JP 2009034701
(71) Applicant: Yokogawa Electric Corporation, Tokyo 180-8750 (JP)
(72) Inventor: Okada, Satoshi, Musashino-shi Tokyo 180-8750 (JP)
(74) Representative: Grünecker, Kinkeldey, Stockmair & Schwanhäusser Anwaltssozietät

(57) **Abstract**

An alarm defining device includes a rule input accepting section which accepts an input of an attribute rule, and an attribute defining section which defines an attribute for each alarm status in a plant according to the rule accepted by the rule input accepting section.

## Description

### TECHNICAL FIELD

The present disclosure relates to an alarm defining device and an alarm defining method for defining alarm status attributes for each alarm status in a plant.

### RELATED ART

In a field control system, alarm status attributes are specified for each alarm status in a plant. Such attributes include significance, the alarm indicator color, the presence or absence of alarm detection and the presence or absence of automatic deletion at the time of restoration. Since the contents of the specification of attributes are different among plants, engineering work for specifying the attributes of the alarm statuses is performed in advance for each alarm status.

[Patent Reference 1] Japanese Unexamined Patent Application Publication No. 2006-318106

However, there are a large number of alarm statuses; for example, in a plant where a hundred thousand tags are present, there are appropriately five hundred thousand alarm statuses. Therefore, the engineering work to specify attributes for all the alarm statuses requires a large burden.

### SUMMARY

Exemplary embodiments of the present invention provide an alarm defining apparatus and an alarm defining method capable of reducing the burden of the engineering work when the attributes of the alarm statuses are specified.

An alarm defining device according to an exemplary embodiment of the invention comprises:
a rule input accepting section which accepts an input of an attribute rule; and
an attribute defining section which defines an attribute for each alarm status in a plant according to the rule accepted by the rule input accepting section.

The alarm defining device may further comprise:
a correction input accepting section which accepts a selection of a specific alarm status from among the alarm statuses whose attributes are defined by the attribute defining section and accepts an input for individually correcting the attribute of the selected specific alarm status.

In the alarm defining device, the attribute may include an attribute related to:
significance of an alarm; an alarm indication condition; the presence or absence of alarm detection; or the presence or absence of automatic deletion of alarm condition at the time of restoration.

An alarm defining method according to an exemplary embodiment of the invention, comprises:
a step of accepting an input of an attribute rule; and
a step of defining an attribute for each alarm status in a plant according to the rule accepted at the step of accepting the input of the rule.

The alarm defining method may further comprise:
a step of accepting a selection of a specific alarm status from among the alarm statuses whose attributes are defined at the step of defining the attribute and accepting an input for individually correcting the attribute of the selected specific alarm status.

According to the alarm defining device of the present invention, since an input of an attribute rule is accepted and the attributes of the alarm statuses can be collectively defined according to the accepted rule, the burden of the engineering work when the attributes of the alarm statuses are specified can be reduced.

According to the alarm defining method of the present invention, since an input of an attribute rule is accepted and the attributes of the alarm statuses can be collectively defined according to the accepted rule, the burden of the engineering work when the attributes of the alarm statuses are specified can be reduced.
Other features and advantages may be apparent from the following detailed description, the accompanying drawings and the claims.

### BRIEF DESCRIPTION OF THE DRAWINGS

FIG. 1 is a block diagram functionally showing the structure of an alarm defining device of an embodiment;
FIG 2 is a view showing an example of the description of an alarm rule;
FIG. 3 is a view showing a display example of an alarm status attribute list on a display screen;
FIG 4 is a view showing a screen display where an attribute correction operation is accepted for the alarm status attribute list; and
FIG. 5 is a view showing an example in which the default is not displayed and only the corrected parts are displayed.

### DETAILED DESCRIPTION

Hereinafter, an embodiment of the alarm defining device according to the present invention will be described.

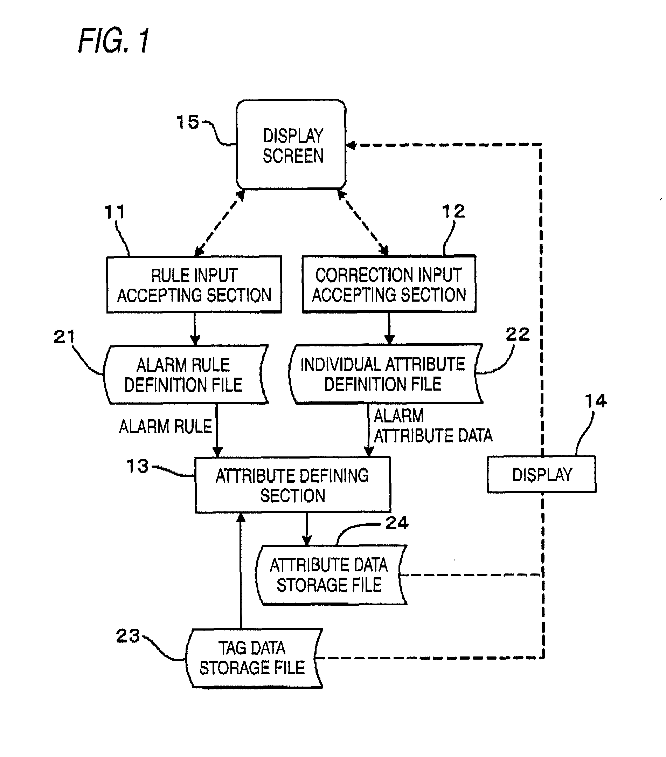

FIG. 1 is a block diagram functionally showing the structure of an alarm defining device of the present embodiment.

As shown in FIG. 1, the alarm defining device of the present embodiment includes: a rule input accepting section 11 for accepting an input of an attribute rule; an attribute defining section 12 for defining the attributes of the alarm statuses according to the rule accepted by the rule input accepting section 11; and a correction input accepting section 13 for accepting a selection of a specific alarm status from among the alarm statuses whose attributes are defined by the attribute defining section and accepting an input for individually correcting the attribute of the selected specific alarm status.

Next, the operation of the alarm defining device of the present embodiment will be described.

The rule input accepting section 11 accepts an input of an alarm rule (alarm definition) using the attribute of the alarm status, according to the user's input operation. The inputted alarm rule is stored in an alarm rule definition file 21 (FIG. 1).

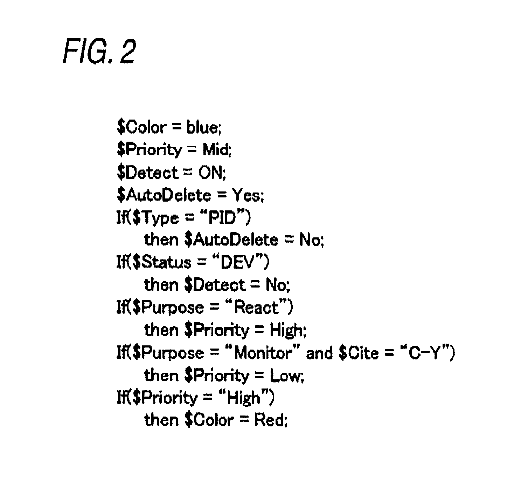

FIG 2 is a view showing an example of the description of the inputted alarm rule.

In the example of FIG 2, the following are shown as principle rules:
(1) the default of the indicator color on the monitor is blue (blue);
(2) the default of the priority of the alarm is medium (Mid);
(3) the alarm condition detection is on (ON); and
(4) the automatic deletion of the alarm condition at the time of restoration from the alarm is executed (Yes).

The following are shown as conditional rules:
(5) when the instrument type is PID, the automatic deletion is not executed (No);
(6) when the status is DEV, the alarm condition detection is note executed (No);
(7) when the object of control is to operate the instrument (react), the priority is high (High);
(8) when the object of control is to monitor the instrument (Monitor) and the site is C-Y, the priority of the alarm is low (Low); and
(9) when the priority of the alarm is high (High), the indicator color on the monitor is red (Red).

Such alarm rules can be freely created by the user according to the realities of the plant, and are inputted through the rule input accepting section 11. The alarm rules inputted through the rule input accepting section 11 are stored in the alarm rule definition file 21 in a predetermined file format

The attribute defining section 12 collectively defines the attributes of the alarm statuses for all the tags according to the alarm rules stored in the alarm rule definition file 21. The tags present in a plant are all stored in a tag data storage file 23 shown in FIG 1, and the attribute defining section 12 successively associates the tags stored in the tag data storage file 23 with attributes according to the alarm rules. The list of the alarm status attributes created by the attribute defining section 12 is stored in an attribute data storage file 24.

The list of the alarm status attributes stored in an attribute data storage file 24 is displayed on a display screen 15 by a display 14 shown in FIG 1.

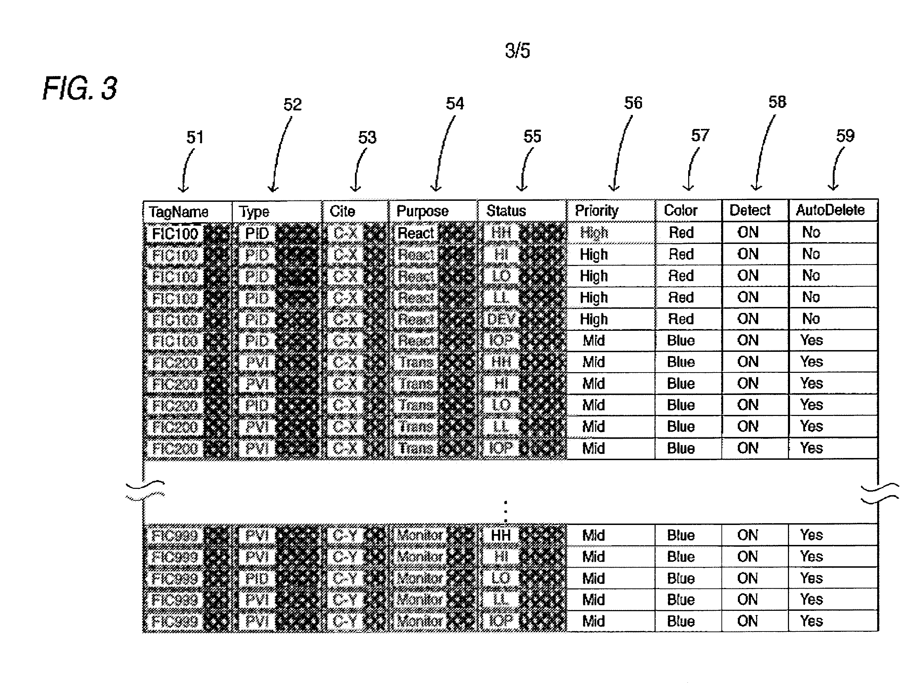

FIG 3 shows a display example of the alarm status attribute list on the display screen 15.

In the example of FIG. 3, as display columns showing alarm status attributes, the following are provided: a display column 51 showing the tag; a display column 52 showing the instrument (tag) type; a display column 53 showing the site; a display column 54 showing the purpose; a display column 55 showing the status; a display column 56 showing the priority; a display column 57 showing the indicator color on the monitor; a display column 58 showing the presence or absence of detection of the alarm condition; and a display column 59 showing the presence or absence of the automatic erasure of the alarm condition at the time of restoration from the alarm.

The correction input accepting section 13 accepts the user's operation on the alarm status attribute list on the display screen 15 (FIG. 3) to thereby individually accept the correction of the attribute for the alarm status. The contents of the attribute correction are stored in an individual attribute definition file 22 shown in FIG. 1. The individual attribute definition file 22 is read by the correction input accepting section 13, and is reflected in the attribute data storage file 24. In the attribute data storage file 24, all the attributes are stored in a condition where it is distinguished whether each attribute of each alarm status is one conforming to the alarm rule or one that is individually corrected.

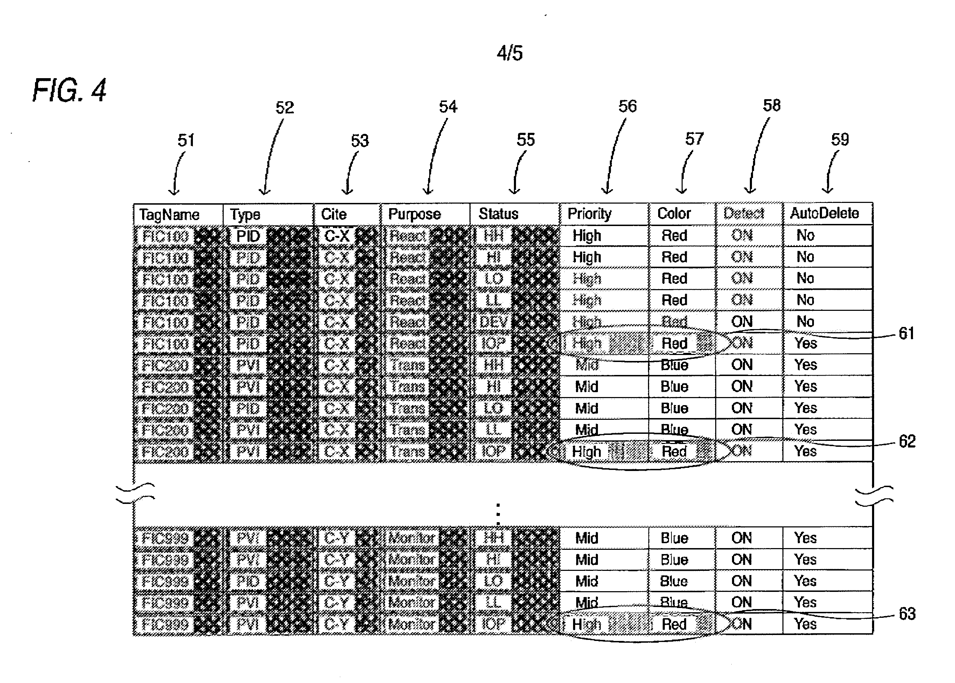

FIG. 4 shows the screen display where an attribute correction operation is accepted for the alarm status attribute list (FIG. 3).

In FIG 4, an example is shown in which displays in areas 61, 62 and 63 reflect the attribute correction and for each alarm status, the "priority" shown in the display column 56 is corrected from "medium" (Mid) to "high" (High) (see FIG. 3). In response to the correction of the priority, the above-mentioned conditional rules are reflected in the data of the attribute data storage file 24, so that the "indicator color on the monitor" in the display column 57 is automatically switched from "blue" (Blue) to "red" (Red).

As shown in FIG. 4, the alarm status attributes collectively defined according to the alarm rules are shown as the default display, and the display condition of the areas 61, 62 and 63 where attributes are corrected are made different from the default display, whereby the corrected parts are clearly indicated.

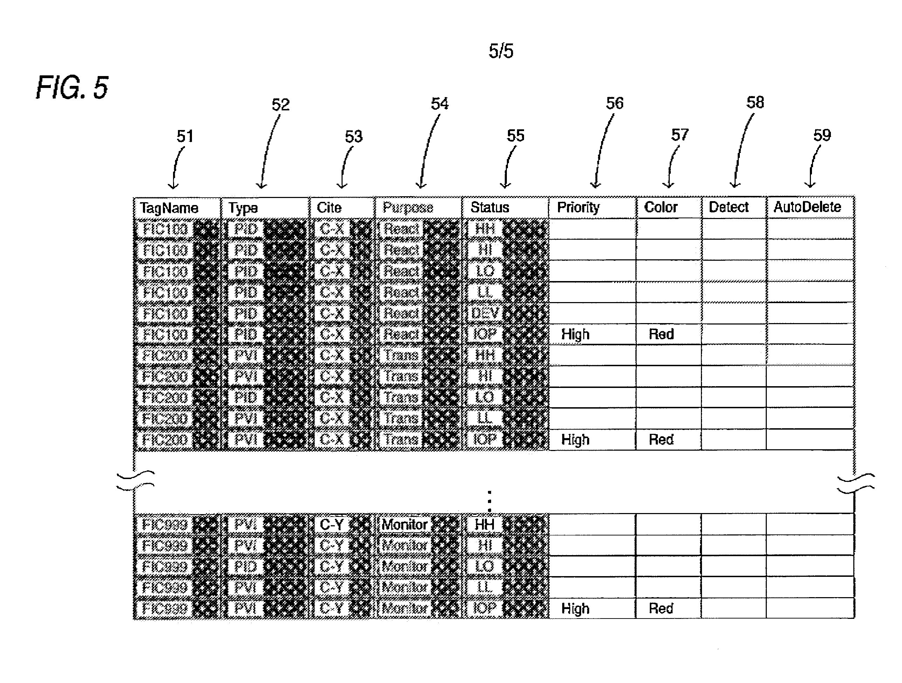

FIG. 5 shows an example in which the default is not displayed and only the corrected parts are displayed. As described above, the presence or absence of the default display can be switched based on the user's operation.

The attribute data storage file 24 created by the above-described operation is transferred to the field control system and reflected in the alarm processing.

As described above, according to the alarm defining device of the present embodiment, an input of an alarm rule by the user is accepted and the attributes of the alarm statuses can be collectively defined according to the alarm rule. For the alarm statuses to which the alarm rule is not applied, the attributes can be individually corrected. Consequently, by using the tendency of the attribute combination according to the characteristic of the plant, the attributes of a large number of alarm statuses can be set with a simple input operation. In addition, for the parts that require correction, attributes can be individually set.

In comparatively small-scale plants, there are cases where the labor for the input operation is smaller when attributes of alarm statuses are individually specified without the use of an alarm rule, and in such cases, attributes can be set only by an input operation through the correction input accepting section 13.

As described above, according to the alarm defining device of the present invention, since an input of an attribute rule is accepted and the attributes of the alarm statuses can be collectively defined according to the accepted rule, the burden of the engineering work when the attributes of the alarm statuses are specified can be reduced.

The range of application of the present invention is not limited to the above-described embodiment. The present invention is widely applicable to alarm defining devices and alarm defining methods for defining the attributes of the alarm statuses for each alarm status in a plant.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. An alarm defining device comprising:
a rule input accepting section which accepts an input of an attribute rule; and
an attribute defining section which defines an attribute for each alarm status in a plant according to the rule accepted by the rule input accepting section.

2. The alarm defining device according to claim 1, comprising:
a correction input accepting section which accepts a selection of a specific alarm status from among the alarm statuses whose attributes are defined by the attribute defining section and accepts an input for individually correcting the attribute of the selected specific alarm status.

3. The alarm defining device according to claim 1 or 2, wherein the attribute includes an attribute related to: significance of an alarm; an alarm indication condition; the presence or absence of alarm detection; or the presence or absence of automatic deletion of alarm condition at the time of restoration.

4. An alarm defining method comprising:
a step of accepting an input of an attribute rule; and
a step of defining an attribute for each alarm status in a plant according to the rule accepted at the step of accepting the input of the rule.

5. The alarm defining method according to claim 4, comprising:
a step of accepting a selection of a specific alarm status from among the alarm statuses whose attributes are defined at the step of defining the attribute and accepting an input for individually correcting the attribute of the selected specific alarm status.
